# DEMANDE DE BREVET EUROPEEN

(11) **EP 1 240 929 A1**
(43) Date de publication de la demande: **18.09.2002**
(21) Numéro de dépôt: 01870046.8
(22) Date de dépôt: 13.03.2001
(51) Int. Cl.: B01D 1/00

(54) **Régénérateur de solvants par distillation**

(71) Demandeur: Deckers, Eugène, 4607 Berneau (BE)
(72) Inventeur: Deckers, Eugène, 4607 Berneau (BE)
(74) Mandataire: Van Malderen, Michel

(57) **Abrégé**

Régénérateur de solvants usés, constitué par une cuve intérieure destinée à contenir le solvant à traiter et une cuve extérieure enveloppant la première et contenant un isolant (4), caractérisé en ce qu'un réchauffeur en fusion (7) placé en contact direct avec le fond de la cuve intérieure chauffe celle-ci, sans utilisation d'huile, par contact direct.

## Description

### Objet de l'invention

La présente invention concerne un régénérateur de solvants utilisant le procédé de distillation, afin de permettre la séparation et la récupération de solvants d'une part, et les résidus qui les saturent d'autre part.

### Arrière-plan technologique

De nombreuses industries utilisent des solvants, notamment pour le nettoyage de pièces mécaniques, de pistolets de peinture etc. Ces solvants se saturent progressivement de résidus et ils doivent être, soit éliminés, soit recyclés après séparation des résidus qu'ils contiennent.

La seconde solution est de loin préférable compte tenu du coût des solvants et du risque que présente, pour le milieu, le rejet incontrôlé de tels solvants saturés. La distillation constitue la solution la plus intéressante pour réaliser cette régénération.

Il existe un certain nombre de régénérateurs de solvants dans lesquels on observe une série d'inconvénients qui rendent leur utilisation onéreuse et techniquement compliquée.

Certains de ces régénérateurs sont constitués par une cuve intérieure destinée à recevoir le solvant usé à traiter, et une cuve extérieure formant double enveloppe.

Celle-ci contient de l'huile ainsi qu'une résistance dite thermoplongeur qui est immergée dans l'huile contenue dans la double enveloppe pour chauffer le solvant se trouvant dans la cuve intérieure par un type de chaufferie indirecte (style bain-marie). Ce système entraîne une consommation énergétique très élevée et a l'inconvénient de provoquer des incrustations qui, étant recuites sur la paroi, collent à celle-ci et obligent l'utilisateur à travailler avec un sac de distillation qui donne un surcoût au processus.

Les systèmes existants nécessitent de plus une vidange d'huile au moins annuelle (un appareil de 50 l nécessitant 25 l d'huile), ainsi qu'un nettoyage de la résistance.

Finalement, afin de pouvoir monter en température la quantité relativement importante d'huile, la résistance doit chauffer sans discontinuer pendant environ 40 minutes et, après une quinzaine de minutes, elle a déjà atteint une température de 300 à 400°C. Considérant que l'huile a un point de crackage de 320°C, l'huile atteint un niveau de détérioration tel que l'utilisateur est souvent obligé de la changer plus fréquemment que la vidange annuelle d'huile généralement préconisée par le fabricant.

D'autres inconvénients technologiques sont apparus pour les dispositifs existants et le but de l'invention est d'y porter remède.

### Eléments caractéristiques de l'invention

L'invention propose un régénérateur de solvants usés, constitué par une cuve intérieure destinée à contenir le solvant à traiter et une cuve extérieure enveloppant la première et contenant un isolant, caractérisé en ce qu'un réchauffeur en fusion placé en contact direct avec le fond de la cuve intérieure chauffe celle-ci, sans utilisation d'huile, par contact direct.

Du fait que le réchauffeur en fusion chauffe uniquement le solvant par le fond, ceci empêche les incrustations sur les parois et évite ainsi l'utilisation de sac de distillation.

Selon une forme préférée de l'invention, le solvant distillé est condensé en vue de sa récupération par un échangeur à plaques, refroidi par de l'eau.

Le dispositif de l'invention peut être conçu, aussi bien pour réaliser une distillation atmosphérique qu'une distillation sous-vide.

Le régénérateur peut être équipé d'un mélangeur et d'équipements d'injection d'air ou de vapeur, de façon que vers la fin d'un cycle de distillation, on provoque un mélange des résidus et/ou l'injection d'air ou de vapeur d'eau. Ceci permet une séparation totale entre les solvants à régénérer et les résidus liquides du type huileux qui saturent les solvants. Le récupérateur peut être aussi équipé d'un racleur de fond pour les résidus solides, afin d'éviter l'encrassement du fond et permettre la formation de résidus poudreux.

Divers équipements de régulation sont incorporés au régénérateur et seront décrits ci-après.

D'autres caractéristiques et avantages de l'invention apparaîtront à la lecture d'une description d'une forme d'exécution préférée de l'invention illustrée par les schémas annexés.

### Courte description des dessins schématiques annexés

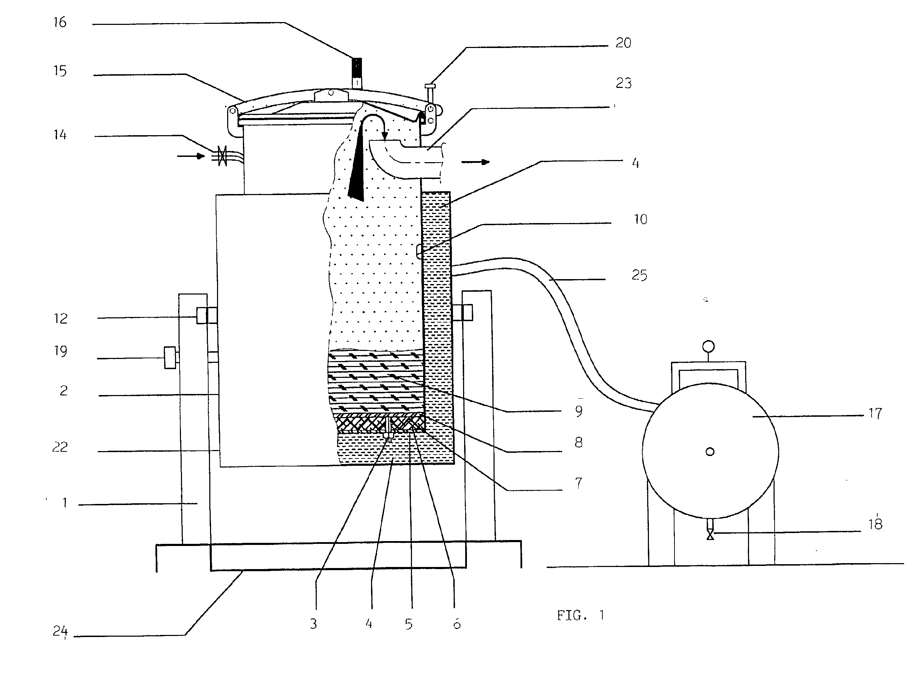

La Figure 1 représente une vue latérale d'un régénérateur en écorché partiel ;

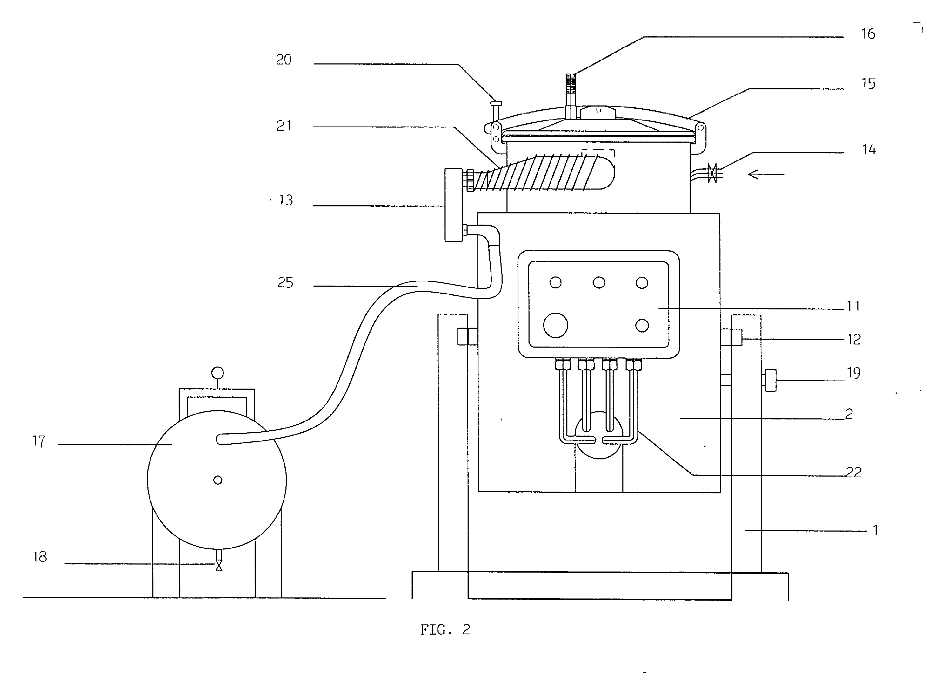

La Figure 2 représente une vue latérale en élévation du côté opposé à celle de la Figure 1 ;

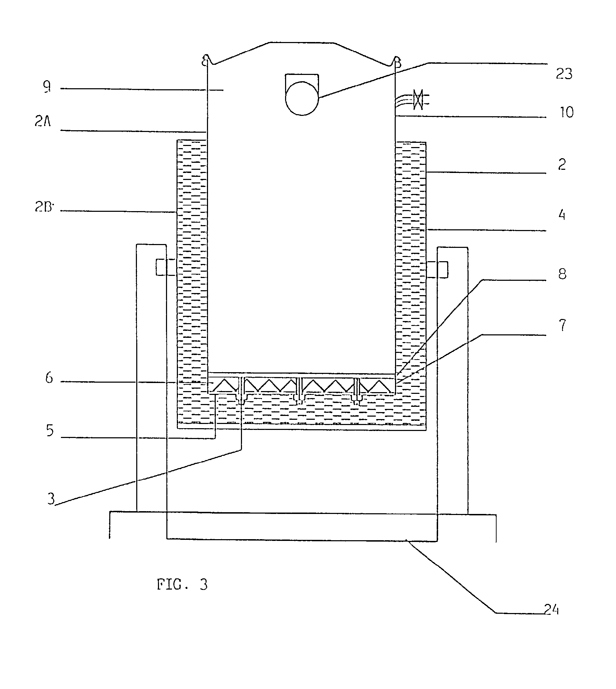

La Figure 3 est une vue en coupe de la cuve et du support de cuve ;

La Figure 4 est une vue de l'échangeur à plaques.

### Description d'une forme d'exécution préférée de l'invention

L'invention sera décrite plus en détail à titre d'illustration, en référence aux dessins schématiques déjà décrits, des repères de références identiques étant utilisés dans les différentes vues pour des éléments constitutifs identiques.

Un support 1 pour la cuve 2 de régénération repose sur un socle 24 et permet de la basculer à la fin d'un cycle pour prélever aisément les résidus de distillation. Ce support peut être avantageusement réalisé en acier « inox 304 ».

La cuve 2, pour ce qui constitue les parties en contact avec les solvants, peut être réalisée en inox 316, les autres parties peuvent être en « inox 304 ».

D'autres matériaux peuvent également convenir pour la cuve, y compris des matériaux plastiques résistant à la température et aux solvants, et les alliages d'aluminium.

La cuve 2 est à double enveloppes, c'est-à-dire qu'elle comporte une cuve intérieure 2A et une cuve extérieure 2B entre lesquelles est interposée une isolation 4.

Sur le fond de la cuve 2A est disposé un réchauffeur en fusion 7, composé d'une résistance électrique coulée dans de l'aluminium avec sonde de contrôle thermique et thermostat de sécurité.

Le réchauffeur 7 est maintenu par une vis de fixation 3 sur un disque d'écrasement 5 avec interposition d'un joint d'isolation thermique 6. Un joint de transfert thermique 8 sous forme d'un disque de cuivre et d'une pâte conductrice assure à la fois le transfert thermique et l'étanchéité.

Le solvant usé, contenu dans la cuve intérieure et indiqué par le repère 9 est chauffé et s'évapore.

L'installation alimentée par les câbles d'alimentation électrique 22 des résistances chauffantes comporte un tableau de commande constitué d'un régulateur électronique, d'un timer électronique, de deux relais statiques, de relais de commandes électroniques, de fusibles de protection et de borniers de raccordement représenté schématiquement ou identifié. Les modèles de base sont équipés d'un thermostat à capillaire.

L'installation est équipée d'un échangeur à plaques 13, constitué de plaques brasées à débit turbulent et agissant comme condensateur.

La vanne d'entrée 14 permet d'alimenter le solvant sale dans la cuve intérieure, qui est équipée d'un couvercle 15, et munie elle-même d'une soupape de sécurité 16 et d'un verrouillage 20 du couvercle.

Une chambre de pré-refroidissement et de détente des vapeurs 21 est intercalée, de préférence, avant l'échangeur à plaques 13.

La chambre 21 offre deux avantages :
- un refroidissement statique s'effectue par l'air ambiant et,
- on évite un pont thermique trop important qui pourrait déformer les plaques de l'échangeur 13 servant de condenseur

L'ajout d'un enroulement hélicoïdal autour de la chambre 21 permet d'augmenter le refroidissement statique et évite qu'un utilisateur ne puisse se brûler au contact d'un tuyau à haute température.

Une tubulure 23 pénètre dans la zone vapeur du régénérateur et est raccordée à un déflecteur. Cette tubulure 23 est raccordée à l'échangeur 13 qui lui-même, par le conduit 25, est en communication avec une cuve de réception du distillat 17 pouvant également constituer l'unité de mise sous-vide de l'installation. Cette unité 18 est équipée d'un orifice de sortie du distillat 17.

En opération de distillation, la cuve est maintenue dans la position représentée à l'aide d'un élément de blocage 19 de cette cuve.

Un volant 12 permet la basculement de la cuve à la fin de l'opération de distillation pour permettre d'évacuer les résidus après avoir libéré le blocage 19.

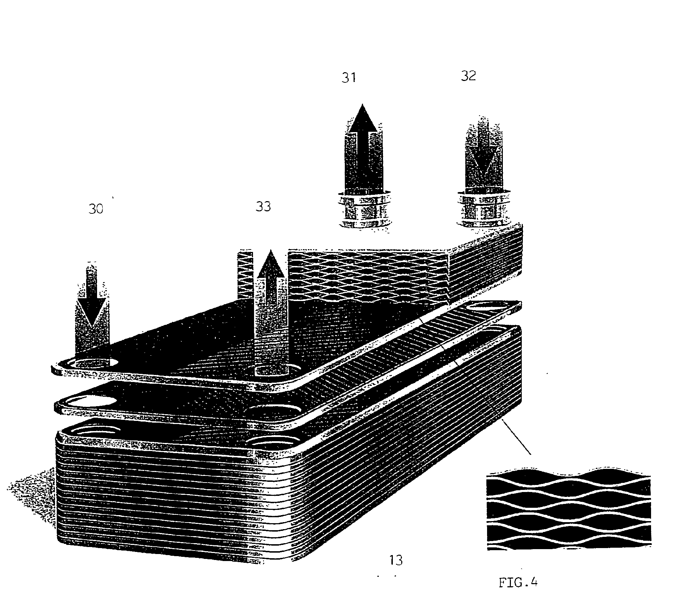

L'échangeur à plaques repris à la Figure 4 a l'avantage, par ses multi-canaux, de permettre un échange thermique maximal pour un encombrement réduit. L'échangeur 13 comporte une entrée de solvant 30, une sortie de solvant 31, une entrée d'eau de refroidissement 32 et une sortie d'eau de refroidissement 33.

Comparé à une échangeur tubulaire, un échangeur à plaques tel que représenté se distingue par sa faible consommation d'eau. Un échangeur tubulaire nécessite environ 15 l d'eau pour refroidir 1 l de solvant distillé, tandis que l'échangeur à plaques quant à lui ne nécessite que 2 l d'eau par litre de solvant distillé.

Par sa construction en grande série, l'échangeur à plaques est reconnu pour être le plus performant et le plus fiable actuellement, pour un prix de revient raisonnable.

La régulation de la partie chauffante est réglée de deux manières différentes selon l'invention.

Le réchauffeur en fusion permet une très grande précision quant à sa puissance de chauffe.

Ceci permet une montée en température progressive, ce qui a pour avantage de donner le temps à la fraction de basse température du solvant de monter en température et, ainsi, d'éviter de faire remonter avec les vapeurs, les résidus qui se trouvaient dans le solvant.

Ceci constitue un avantage important par rapport au système ancien dont la puissance de chauffe très élevée, rendue nécessaire pour chauffer l'huile thermique, provoquait des montées de chaleur trop rapides pouvant entraîner des résidus vers la sortie.

A la fin de l'opération de distillation, le refroidissement, lorsqu'on a utilisé un réchauffeur en fusion, demande deux fois moins de temps que celui nécessaire lors d'un appareil dans lequel le réchauffeur est constitué par un bain d'huile. Il en résulte que l'utilisateur peut commencer plus rapidement à évacuer les résidus et à entreprendre une nouvelle distillation.

## Revendications

1. Régénérateur de solvants usés, constitué par une cuve intérieure (2A) destinée à contenir le solvant à traiter et une cuve extérieure (2B) enveloppant la première et contenant un isolant (4), **caractérisé en ce qu'**un réchauffeur en fusion (7) placé en contact direct avec le fond de la cuve intérieure (2A) chauffe celle-ci, sans utilisation d'huile, par contact direct.

2. Régénérateur selon la revendication 1, **caractérisé en ce que** le solvant (9) distillé est condensé en vue de sa récupération par un échangeur à plaques (13), refroidi par le l'eau.

3. Régénérateur selon la revendication 1 ou 2, **caractérisé en ce qu'**il réalise une distillation atmosphérique ou une distillation sous-vide.

4. Régénérateur selon l'une quelconque des revendications 1 à 3, **caractérisé en ce qu'**il est équipé d'un mélangeur et d'équipements d'injection d'air ou de vapeur, de façon que vers la fin d'un cycle de distillation, on provoque un mélange des résidus et/ou l'injection d'air ou de vapeur d'eau.

5. Régénérateur selon l'une quelconque des revendications 1 à 4, **caractérisé en ce qu'**il est équipé d'un racleur de fond pour les résidus solides, destiné à éviter les encrassements du fond et permettre la formation de résidus poudreux.

6. Régénérateur selon l'une quelconque des revendications 1 à 5, **caractérisé en ce qu'**il comporte une chambre (21) avant l'échangeur à plaques (13)
- assurant un refroidissement statique effectué par l'air ambiant et ;
- évitant un pont thermique trop important qui pourrait déformer les plaques de l'échangeur (13).
